Europäisches Patentamt

European Patent Office

Office européen des brevets

(11) Numéro de publication: **0 018 262**
**B1**

(12) **FASCICULE DE BREVET EUROPEEN**

(45) Date de publication du fascicule du brevet: **04.01.84**

(51) Int. Cl.³: **G 21 C 1/02**

(21) Numéro de dépôt: **80400450.5**

(22) Date de dépôt: **03.04.80**

(54) Réacteur nucléaire à neutrons rapides et à cuve interne cylindrique.

(30) Priorité: **06.04.79 FR 7908793**

(43) Date de publication de la demande:
**29.10.80 Bulletin 80/22**

(45) Mention de la délivrance du brevet:
**04.01.84 Bulletin 84/1**

(84) Etats contractants désignés:
**BE DE GB IT NL**

(56) Documents cités:
**DE - A - 2 535 378**
**FR - A - 2 133 530**
**FR - A - 2 220 847**
**FR - A - 2 337 408**
**FR - A - 2 346 816**
**FR - A - 2 357 987**
**FR - A - 2 370 344**

(73) Titulaire: **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur: **Artaud, Robert**
**9, Avenue Claude Debussy**
**F-13100 Aix en Provence (FR)**
Inventeur: **Aubert, Michel**
**Chemin de Saint Roustagne**
**F-04100 Manosque (FR)**
Inventeur: **Renaux, Charley**
**Les Extrées**
**F-13490 Jouques (FR)**

(74) Mandataire: **Mongrédien, André et al,**
**c/o BREVATOME 25, rue de Ponthieu**
**F-75008 Paris (FR)**

Courier Press, Leamington Spa, England.

Réacteur nucléaire à neutrons rapides et à cuve interne cylindrique

La présente invention a pour objet un réacteur nucléaire à neutrons rapides du type à cuve interne cylindrique.

De façon plus précise, la présente invention concerne un réacteur nucléaire à neutrons rapides du type intégré et notamment refroidi par un métal liquid tel que du sodium liquide ou d'autres métaux liquides équivalents.

On sait que dans les réacteurs nucléaires à neutrons rapides, du type intégré et refroidis par un métal liquide, on trouve à l'intérieur de la cuve principale renfermant le métal liquide de refroidissement une cuve interne dont la fonction principale est de séparer d'une part le sodium chaud qui sort du coeur du réacteur contenu dans la cuve interne et d'autre part, le sodium froid qui sort des échangeurs disposés dans l'espace annulaire, ou intercuves, compris entre la cuve interne et la cuve principale.

Pour assurer cette séparation, diverses dispositions de cuve interne ont déjà été prévues. On peut citer tout d'abord les cuves internes dites à redan. Ce redan traversé par les échangeurs intermédiaires permet de séparer l'entrée de l'échangeur, alimentée par le sodium sortant du coeur, vis-à-vis de la sortie de l'échangeur qui débouche dans l'intercuve où sont logées les pompes primaires.

Une autre solution consiste à utiliser une cuve interne de forme générale cylindrique. Dans ce cas, des conduites relient l'intérieur de la cuve interne au-dessus du coeur à l'entrée des échangeurs intermédiaires qui sont eux-mêmes entourés par une virole.

Ce type de réacteur est en particulier décrit dans la demande de brevet FR—A—2 337 408 du 29 décembre 1975 déposée au nom du demandeur. Avec ce type de cuve interne, il existe un espace annulaire entre la périphérie externe du coeur ou plus précisément sa protection neutronique latérale et la partie inférieure de la cuve interne. Cet espace annulaire est le siège de mouvements de convection du sodium chaud sortant du coeur, ces mouvements pouvant être préjudiciables à la tenue mécanique des structures telles que le sommier supportant le coeur et le platelage sur lequel repose le sommier. Il so pose donc des problèmes de réchauffement de ces structures et il est nécessaire de prévoir des moyens pour éviter les mouvements de convection.

Un autre inconvénient d'une telle conception est que les conduites qui guident ce métal liquide chaud entre l'intérieur de la cuve interne et les échangeurs de chaleur sont directement solidaires de la cuve interne. L'écoulement du métal liquide chaud dans ces conduites entraîne des vibrations qui se transmettent ainsi à l'ensemble constitué par la cuve interne et son supportage.

On connait aussi du brevet DE—A—2 535 378 un réacteur à boucles comportant une cuve interne cylindrique suspendue doublée par un baffle, et du brevet FR—A—2 370 344 un réacteur intégré comportant également une cuve interne cylindrique suspendue doublée par un baffle comprenant deux parties cylindriques raccordées par une partie tronconique. Toutefois, ces baffles ne constituent pas des baffles de confinement mais seulement une structure de protection en cas d'accident pour le brevet DE—A—2 535 378 ou une structure servant à refroidir la cuve interne suspendue dans le brevet FR—A—2 370 344.

La présente invention a précisément pour objet un réacteur nucléaire du type intégré et à cuve interne cylindrique reposant sur le fond de la cuve principale, dans lequel on ne retrouve pas les inconvénients rappelés ci-dessus et dans lesquels en particulier on évite d'une part la création de cette zone annulaire autour du coeur et d'autre part la création d'une laison rigide entre la cuve interne et chaque échangeur.

Le réacteur nucléaire à neutrons rapides, refroidi par un métal liquide, comprenant une cuve principale fermée par une dalle supérieure et dans cette cuve principale au moins un échangeur de chaleur entre ledit métal liquide et un deuxième fluide, au moins une pompe de circulation dudit métal liquide, une cuve interne cylindrique à axe vertical posée sur un platelage reposant sur le fond de la cuve principale, ladite cuve interne contenant le coeur du réacteur, ce dernier reposant sur un sommier en appui contre le fond de ladite cuve principale par l'intermédiaire dudit platelage, le métal liquide circulant de bas en haut à travers le coeur du réacteur, se caractérisé en ce que ladite cuve interne comprend un baffle interne de révolution autour de l'axe vertical de la cuve interne, ledit baffle comprenant une partie supérieure cylindrique, adjacente à la cuve interne et disposée au-dessus du coeur, et une partie inférieure cylindrique de plus faible diamètre que la partie supérieure et entourant le coeur, cette partie inférieure étant raccordée à la partie supérieur par une partie tronconique, ledit baffle confinant ainsi le métal liquide "chaud" sortant du coeur dans une zone située entièrement au-dessus de ce dernier, au moins une conduite étant disposée entre la partie tronconique du baffle et au moins un échangeur de chaleur pour raccorder l'entrée de ce dernier à ladite zone de confinement du métal liquide chaud, ladite conduite reposant indirectement sur le fond de la cuve et n'étant pas solidaire de l'échangeur de chaleur correspondant, de façon à pouvoir se déplacer librement par rapport à celui-ci.

De toute façon, l'invention sera mieux comprise à la lecture de la description qui suit d'un mode de réalisation du réacteur nucléaire objet de l'invention donné à titre d'exemple non limitatif. La description se réfère aux figures annexées sur lesquelles on a représenté:

— sur la figure 1, une vue en coupe verticale du réacteur nucléaire montrant une pompe et un échangeur intermédiaire;

— sur la figure 2, une demi-vue en coupe horizontale selon le ligne II—II de la figure 1;

— sur la figure 3, une vue en coupe à plus grande échelle illustrant une première variante de réalisation de l'invention;

— sur la figure 4, une vue comparable à la figure 3 illustrant une deuxième variante de réalisation de l'invention, et

— sur la figure 5, une vue en coupe verticale du réacteur nucléaire montrant la partie interne du dispositif de manutention des assemblages.

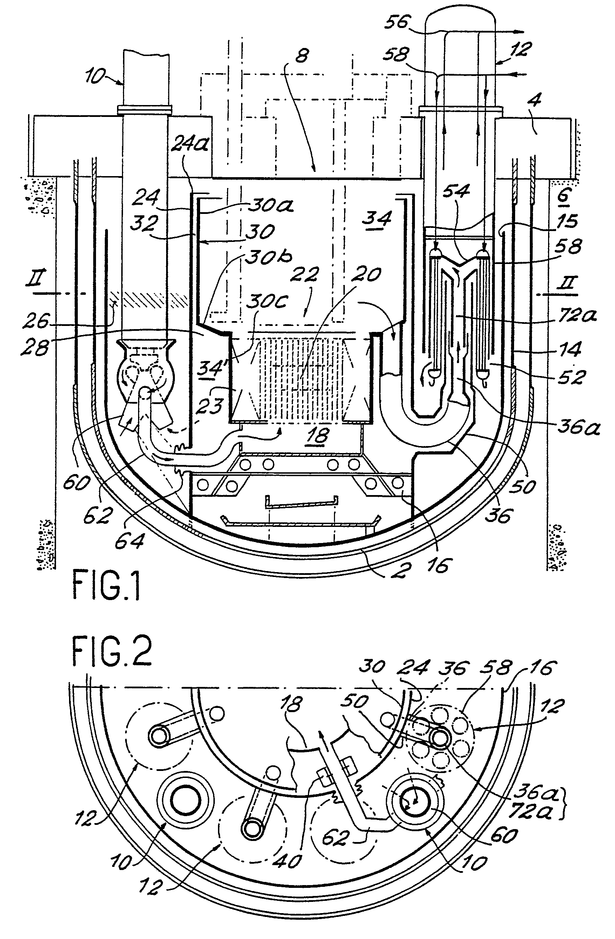

Sur la figure 1, on a représenté l'ensemble du réacteur nucléaire selon l'invention. De façon connue, on retrouve la cuve principale 2 suspendue à la dalle de fermeture supérieure 4 qui repose elle-même sur le massif de confinement 6. Cette dalle 4 comporte un ensemble de bouchons tournants excentrés 8. La dalle 4 sert également au supportage des pompes primaires 10 et des échangeurs intermédiaires 12, organes qui seront décrits plus en détail ultérieurement. La cuve principale 2 est doublée extérieurement par une cuve de sécurité 14 qui est également suspendue à la dalle de fermeture 4. Enfin, on trouve un baffle 15 solidaire de la cuve principale 2 qui sert à assurer de façon connue un refroidissement de la cuve principale 2 et en particulier de sa partie supérieure.

A l'intérieur de la cuve principale 2, on trouve un platelage 16 supporté par la cuve principale 2, ce platelage servant d'une part de supportage au sommier 18 et accessoirement au faux-sommier dans lesquels sont fichés respectivement les assemblages, combustibles ou fertiles 20 constituant le coeur 22 du réacteur et les éléments formant la protection neutronique latérale 23 du coeur. Ces éléments sont par exemple constitués par des rondins métalliques qui forment plusieurs couronnes autour du coeur, les rondins étant disposés en quinconce. Le platelage 16 sert également au supportage de la cuve interne cylindrique 24. Il faut noter que le bord supérieur 24a de la cuve interne 24 est libre.

On voit qu'ainsi la cuve interne 24 sépare l'espace limité par la cuve principale 2 en une zone annulaire 26 dans laquelle sont logés principalement les pompes primaires 10 et les échangeurs intermédiaires 12 et un espace interne de forme générale cylindrique 28 qui contient le coeur. Dans l'espace annulaire 26, on trouve exclusivement un métal liquide qui peut être qualifié de froid. Selon l'invention, à l'intérieur de l'espace 28, on trouve un baffle portant la référence générale 30 qui est constitué par une partie supérieure cylindrique 30a, coaxiale à la cuve interne 24 et délimitant avec elle un espace annulaire 32 d'épaisseur réduite, par une partie de forme générale tronconique 30b et par une partie à nouveau cylindrique et à axe vertical 30c qui entoure la protection neutronique latérale 23 pour venir reposer sur le sommier 18 dans la variante représentée sur les figures. Le baffle 30 ainsi défini sépare à l'intérieur de l'espace interne 28 de la cuve interne 24 une zone 34 de sodium chaud entièrement disposée au-dessus du coeur du réacteur 22, c'est-à-dire au-dessus de la sortie du métal liquide chaud et un espace 34' entre le baffle 30 et la cuve interne 24.

Des conduites 36 relient la partie tronconique 30b du baffle interne 30 aux échangeurs de chaleur 12 pour alimenter ces derniers en métal liquide chaud. Ces conduites ont une forme générale en U et débouchent à la partie inférieure de la canalisation d'alimentation 72a de l'échangeur de chaleur en entourant cette canalisation sur une partie de sa longueur.

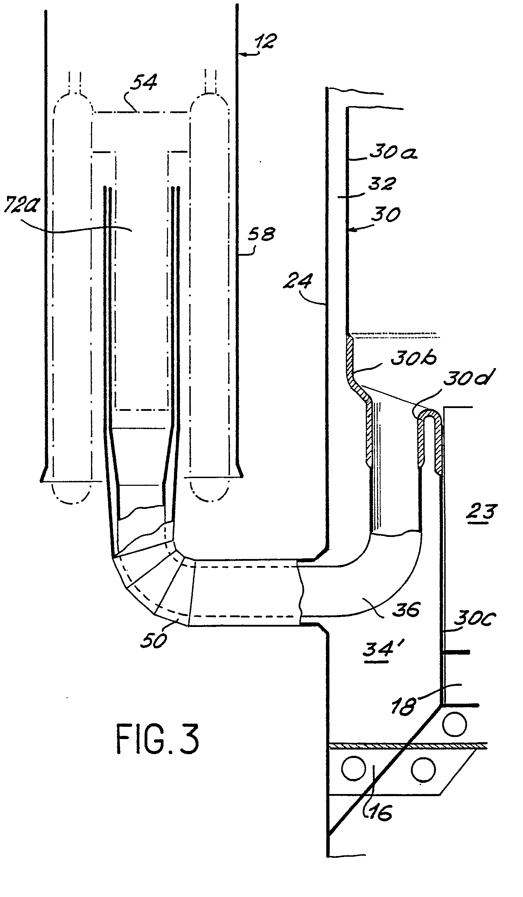

Dans une première variante de réalisation de l'invention représentée sur les figures 1 et 3, les conduites 36 sont réalisées d'un seul tenant et sont solidaires de la partie tronconique 30b du baffle 30, la paroi présentant de préférence une surépaisseur 30d au niveau de la jonction entre le baffle et chacune des conduites. Dans ce cas, le supportage des conduites 36 s'effectue par l'intermédiaire du baffle 30 qui repose comme on l'a vu sur le sommier 18. Bien entendu, le baffle 30 pourrait, dans une variante non représentée, reposer directement sur le platelage 16.

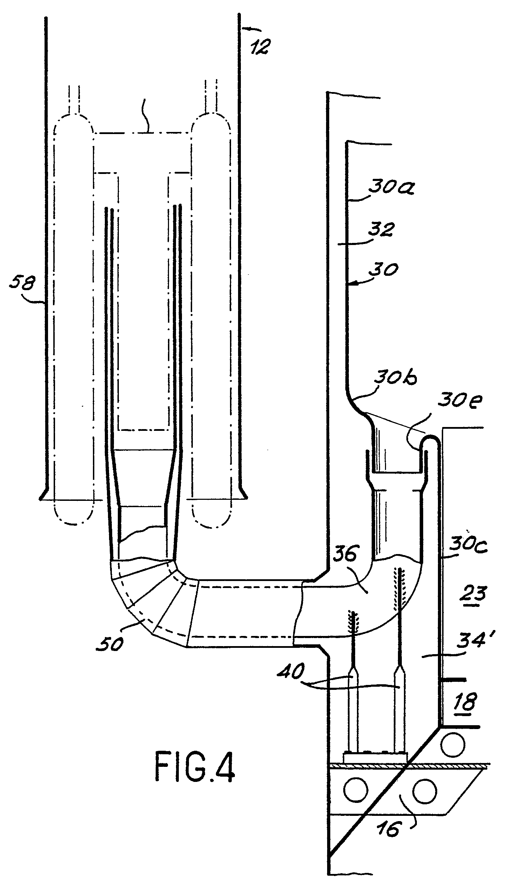

Dans une deuxième variante de réalisation de l'invention représentée sur la figure 4, les conduites 36 sont indépendantes du baffle 30. Ce dernier présente alors, dans sa partie tronconique 30b, des tubulaires 30e sur lesquelles sont emboîtées les conduites 36, celles-ci étant supportées indépendamment du baffle 30 par des dispositifs de supportage 40 dont la partie inférieure est solidaire du platelage 16. Bien que cela ne soit pas indispensable en raison du supportage des conduites 36 par l'intermédiaire du baffle 30, des dispositifs de supportage du type des dispositifs 40 peuvent également être utilisés dans la première variante représentée sur la figure 3.

Dans tous les cas, il est important de noter que l'extrémité supérieure 36a des conduites 36 n'est pas solidarisée avec l'échangeur de chaleur 12 correspondant. On comprend qu'ainsi, sous l'effet des dilatations thermiques dues aux diverses températures du métal liquide de refroidissement, l'ensemble constitué par le baffle 30 et les conduites 36 peut se déplacer librement — et qu'en même temps les conduites 36 peuvent se déplacer librement par rapport aux échangeurs 12. A propos des échangeurs de chaleur 12, il faut indiquer qu'ils peuvent être du type annulaire ou du type modulaire. Dans tous les cas, on réalise une étanchéité pneumatique (sans liaison mécanique) entre chaque conduite 36 et l'échangeur 12 correspondant.

Il est également important d'observer que le baffle 30, compte-tenu de son agencement, confine à l'intérieur de la cuve interne 24 le métal liquide chaud sortant du coeur du réacteur au-dessus de celui-ci. Cela signifie qu'il n'y a plus de circulation de sodium chaud dans l'espace annulaire situé entre la périphérie latérale du coeur 22 du réacteur et la cuve interne (espace 34'). Il n'y a donc plus lieu de prévoir des structures particulières pour éviter les mouvements de convection de métal liquide prenant naissance dans cette région, car le métal liquide chaud ne peut en aucun cas venir au contact du sommier 18 de supportage du coeur. Les problèmes liés au réchauffement de ce sommier sont donc supprimés.

Pour compléter la description du réacteur nucléaire selon l'invention, il y a lieu d'indiquer que de préférence la cuve interne 24 est prolongée par des manchons tels que 50 qui entourent les conduites 36 d'alimentation des échangeurs de chaleur en métal liquide chaud. On réalise ainsi une structure qui permet d'améliorer l'isolation thermique entre l'intérieur des conduites 36 qui véhiculent un métal liquide chaud et l'intercuve 26 dans lequel on trouve le métal liquide froid. Il faut d'ailleurs observer que l'espace annulaire 34' entre le baffle 30 et la cuve interne 24 est rempli par du métal liquide à température intermédiaire, ce qui assure une certaine isolation thermique entre le métal liquide chaud dans l'espace 34 limité par le baffle 30 et le métal liquide froid remplissant l'espace annulaire 26. On a symbolisé par les conduites 56 et 58 la sortie et l'arrivée du fluide secondaire circulant dans l'échangeur 12. La sortie du métal liquide primaire se fait dans l'espace intercuve 26 en-dessous de la virole 58 entourant chaque échangeur de chaleur. L'échangeur représenté est un échangeur modulaire du type décrit dans la demande de brevet FR—A—2 385 067 déposée le 21 mars 1977. L'échangeur est constitué par une pluralité de modules d'échange disposés sur une couronne à l'intérieur d'une enveloppe externe. On pourrait également utiliser un échangeur annulaire du type décrit dans la demande de brevet FR—A—2 346 816 déposée le 29 mars 1976.

Le métal liquide froid sortant des échangeurs thermiques est repris par les buses d'entrée 60 des pompes primaires 10. La sortie de ces pompes primaires est reliée au sommier 18 du réacteur par des tubulaires 62 qui traversent la partie inférieure de la cuve interne 24. L'étanchéité entre le métal liquide froid dans l'espace intercuve 26 et le métal liquide à température intermédiaire dans l'espace annulaire 28 est assurée à ce niveau par des soufflets d'étanchéité tels que 64.

Le circuit du métal primaire de refroidissement dans le réacteur objet de l'invention découle de façon claire de la description précédente. En traversant le coeur 22 du réacteur, le métal liquide s'échauffe et pénètre dans l'espace 34 limité par le baffle 30. Ce métal liquide chaud est repris par les conduites 36 pour entrer dans les échangeurs de chaleur 12. Dans ces échangeurs, il cède sa chaleur au fluide secondaire et il ressort refroidi dans l'espace intercuve 26. Il est alors aspiré par les buses d'entrée 60 des pompes 10 et refoulé par les canalisations 62 dans le sommier 18 d'où il traverse à nouveau le coeur du réacteur.

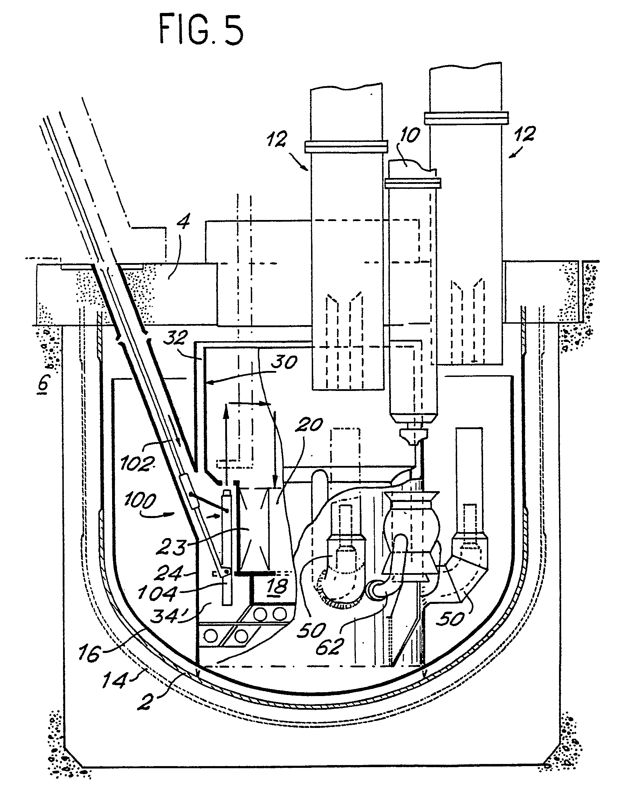

Sur la figure 5, on a représenté la partie interne 100 du dispositif de manutention des assemblages constituant le coeur du réacteur. Comme cela est connu dans certains réacteurs nucléaires à neutrons rapides du type intégré, ce dispositif comprend essentiellement une rampe de manutention 102 et un pot de manutention 104. On voit que le bas de la rampe de manutention débouche dans l'espace 34' entre la cuve interne 24 et la protection neutronique 23, le pot de manutention étant bien sûr également logé dans cet espace.

On voit donc que grâce aux dispositions de l'invention, le dispositif de manutention se loge très facilement et très rationnellement.

Il découle de la description précédente que les caractéristiques de l'invention présentent de nombreux avantages par rapport au réacteur nucléaire à cuve interne cylindrique de l'art antérieur. La cuve interne qui supporte la différence de pression due aux pertes de charge est effectivement et rigoureusement cylindrique; mécaniquement, elle absorbe donc plus facilement ces contraintes. Le baffle interne 30 est de révolution et libre en dilatation, ce qui est favorable pour l'absorption des différentes contraintes mécaniques dues notamment aux dilatations thermiques.

L'implantation du dispositif de manutention des assemblages s'insère naturellement entre la cuve interne 24 et le baffle 30 sans qu'il soit nécessaire de prévoir de structures supplémentaires dues à la traversée du baffle.

Le volume du collecteur de métal liquide chaud est réduit au minimum puisqu'il est limité au volume de la zone 34 définie par le baffle 30. La zone chaude est ainsi confinée; la protection thermique du sommier 18 et du platelage 16 est réalisée par ce confinement du métal liquide chaud dans la zone 34 et par la disposition des tuyaux 62 de refoulement du métal liquide froid dans le sommier.

Enfin, lorsque des dispositifs de supportage 40 supportent les conduites de sortie du métal liquide chaud 36, ces dispositifs permettent de limiter les problèmes dus aux vibrations produites par l'écoulement du métal liquide chaud dans ces conduites 36 et assurent une meilleure tenue aux séismes.

**Revendications**

1. Réacteur nucléaire à neutrons rapides, refroidi par un métal liquide comprenant une cuve principale (2) fermée par une dalle supérieure (4), et dans cette cuve principale au moins un échangeur de chaleur (12) entre ledit métal liquide et un deuxième fluide, au moins une pompe (10) de circulation dudit métal liquide, une cuve interne (24) cylindrique à axe vertical posée sur un platelage (16) reposant sur le fond de la cuve principale, ladite cuve interne contenant le coeur (22) du réacteur, ce dernier reposant sur un sommier (18) en appui contre le fond de ladite cuve principale par l'intermédiaire dudit platelage, le métal liquide circulant de bas en haut à travers le coeur du réacteur, caractérisé en ce que ladite cuve interne comprend un baffle interne (30) de révolution autour de l'axe vertical de la cuve interne, ledit baffle comprenant une partie supérieure cylindrique (30a) adjacente à la cuve interne et surmontant le coeur, et une partie inférieure cylindrique (30c), de plus faible diamètre que la partie supérieure et entourant le coeur, lesdites parties supérieure et inférieure étant raccordées entre elles par une partie tronconique (30b), ledit baffle confinant ainsi le métal liquide "chaud" sortant du coeur, dans une zone (34) située entièrement au-dessus de ce dernier, au moins une conduite (36) étant disposée entre la partie tronconique du baffle et au moins un échangeur de chaleur pour raccorder l'entrée de ce dernier à ladite zone de confinement du métal liquide chaud, ladite conduite reposant indirectement sur le fond de la cuve et n'étant pas solidaire de l'échangeur de chaleur correspondant, de façon à pouvoir se déplacer librement par rapport à celui-ci.

2. Réacteur nucléaire selon la revendication 1, caractérisé en ce que le baffle interne (30) repose sur le fond de la cuve principale (2) par l'intermédiaire de l'une des deux structures de support constituées par ledit sommier (18) et ledit platelage (16).

3. Réacteur nucléaire selon la revendication 2, caractérisé en ce que ladite conduite (36) est réalisée d'une seul tenant et solidaire de la partie tronconique du baffle (30).

4. Réacteur nucléaire selon la revendication 2, caractérisé en ce que la partie tronconique du baffle (30) est munie d'au moins une tubulaire (30c) sur laquelle vient s'emboîter ladite conduite, cette dernière étant supportée par au moins une pièce de supportage (40) reposant sur le fond de la cuve principale (2) par l'intermédiaire de l'une des deux structures de support constituées par ledit sommier (18) et ledit platelage (16).

5. Réacteur nucléaire selon l'une quelconque des revendications précédentes, caractérisé en ce que chaque conduite (36) est reliée à l'entrée d'un échangeur (12) par l'intermédiaire d'une liaison du type à étanchéité pneumatique.

6. Réacteur nucléaire selon l'une quelconque des revendications précédentes, caractérisé en ce que chaque échangeur de chaleur (12) est du type modulaire.

7. Réacteur nucléaire selon l'une quelconque des revendications précédentes, caractérisé en ce que chaque échangeur de chaleur (12) est du type annulaire.

8. Réacteur nucléaire selon l'une quelconque des revendications précédentes, caractérisé en ce qu'il comprend un dispositif de manutention des assemblages du coeur, ledit dispositif comprenant une rampe de transfert (102) traversant la dalle et la cuve interne, ladite rampe débouchant dans l'espace (34') compris entre ladite cuve interne (24) et ledit baffle (30), ledit espace permettant le logement du pot de manutention (104) des assemblages.

**Patentansprüche**

1. Schneller, mit flüssigem Metall gekühlter Kernreaktor, mit einem von einer oberen Decke (4) geschlossenen Hauptbehälter (2), mit in diesem Hauptbehälter mindestens einem Wärmetauscher (12) zwischen dem flüssigen Metall und einem zweiten Fluid, mindestens einer Umlaufpumpe (10) für das flüssige Metall, einem zylindrischen Innenbehälter (24), dessen Achse vertikal verläuft und auf einem auf dem Boden des Hauptbehälter ruhenden Boden (16) gestellt ist, wobei der Innenbehälter den Reaktorkern (22) enthält, der auf einem Träger (18) ruht, welcher sich über den Boden an dem Boden des Hauptbehälters abstützt, wobei das flüssige Metall von unten nach oben durch den Reaktorkern hindurchströmt, dadurch gekennzeichnet, daß der Innenbehälter um die vertikale Achse des Innenbehälters herum ein inneres Rotationsbaffle (30) enthält, welches einem den Innenbehälter benachbarten und den Kern übersteigenden, oberen, zylindrischen Abschnitt (30a) und einen unteren, zylindrischen Abschnitt (30c) aufweist, welcher einen klieneren Durchmesser als der obere Abschnitt hat und den Kern umgibt, daß der obere und der untere Abschnitt miteinander durch einen kegelstumpfförmigen Abschnitt (30b) verbunden sind, daß das Baffle somit das flüssige "heiße" Metall begrenzt, welches den Kern in einem Bereich (34) verläßt, welcher vollständig oberhalb von diesem angeordnet ist, daß wenigstens eine Leitung (36) zwischen dem kegelstumpfförmigen Abschnitt des Baffle und dem wenigstens einem Wärmetauscher angeordnet ist, um den Eingang des letzteren mit dem das flüssige, heiße Metall begrenzenden Bereich zu verbinden, und daß die Leitung indirekt auf dem Boden des Behälters ruht und nicht fest mit dem entsprechenden Wärmetauscher verbunden ist, so daß sie sich frei relativ zu diesem verschieben kann.

2. Kernreaktor nach Anspruch 1, dadurch gekennzeichnet, daß das innere Baffle (30) auf dem Boden des Hauptbehälters (2) mittels einer der von dem Träger (18) und dem Boden (16) gebildeten Tragstrukturen ruht.

3. Kernreaktor nach Anspruch 2, dadurch gekennzeichnet, daß die Leitung (36) in einem Stück ausgebildet und fest mit dem kegelstumpfförmigen Abschnitt des Baffle (30) verbunden ist.

4. Kernreaktor nach Anspruch 2, dadurch gekennzeichnet, daß der kegelstumpfförmige Abschnitt des Baffle (30) mit wenigstens einem Rohr (30c) versehen ist, um welches die Leitung paßt, die von wenigstens einem Tragteil (40) gestützt ist, welches auf dem Boden des Hauptbehälters (2) mittels einer der zwei Tragstrukturen ruht, die von dem Träger (18) und dem Boden (16) gebildet sind.

5. Kernrekator nach irgendeinem der vorhergehenden Ansprüche, dadurch gekennzeichnet, daß jede Leitung (36) mit dem Eingang eines Wärmetauschers (12) mittels einer Verbindung von der Art mit pneumatischer Abdichtung verbunden ist.

6. Kernreaktor nach irgendeinem der vorhergehenden Ansprüche, dadurch gekennzeichnet, daß jeder wärmetauscher (12) von modularer Art ist.

7. Kernreaktor nach irgendeinem der vorhergehenden Ansprüche, dadurch gekennzeichnet, daß jeder Wärmetauscher (12) von ringförmiger Art ist.

8. Kernreaktor nach irgendeinem der vorhergehenden Ansprüche, dadurch gekennzeichnet, daß er eine Fördervorrichtung zum Zusammensetzen des Kernes umfaßt, die eine die Decke und den Innenbehälter durchquerende Überführungsrampe (102) aufweist, und daß die Rampe in dem Raum (34') mündet, welcher von dem Innenbehälter (24) und dem Baffle (30) umfaßt wird, wobei in diesem Raum der Förderbehälter (104) für den Zusammenbau untergebracht werden kann.

## Claims

1. Liquid metal-cooled fast neutron reactor comprising a primary vessel (2) closed by an upper slab (4), and within said primary vessel at least one heat exchanger (12) for heat-exchange between said liquid metal and a second fluid, at least one pump (10) for circulating said liquid metal, a cylindrical internal vessel (24) having a vertical axis, placed on a flooring (16) resting on the bottom of the primary vessel, said internal vessel containing the reactor core (22), which latter rests on a bearing member (18) supported on the bottom of the said primary vessel by means of said flooring, the liquid metal circulating upwardly through the core of the reactor, characterized in that said internal vessel comprises an internal baffle (30) symmetrical about the vertical axis of the internal vessel, said baffle comprising a cylindrical upper part (30a) adjacent to the internal vessel and located above the core, and a cylindrical lower part (30c), having a smaller diameter than the upper part and surrounding the core, said upper and lower parts being connected through a frusto-conical part (30b), said baffle thereby confining the "hot" liquid metal leaving the core within a zone (34) entirely located above the core, at least one conduit (36) being disposed between the frusto-conical part of the baffle and at least one heat exchanger to provide entry into said exchanger of hot liquid metal from said zone of confinement, said conduit resting indirectly on the bottom of the vessel and being non-unitary with the respective heat exchanger, whereby it is freely displaceable with respect thereto.

2. Nuclear reactor according to claim 1 characterized in that the internal baffle (30) rests on the bottom of the primary vessel (2) by way of one of the two support structures constituted by the said bearing member (18) and the said flooring (16).

3. Nuclear reactor according to claim 2 characterized in that said conduit (36) is formed in a single piece and solidly attached to the frusto-conical part of the baffle (30).

4. Nuclear reactor according to claim 2 characterized in that the frusto-conical part of the baffle (30) has at least one short outlet tube (30e) over which fits said conduit, the latter being supported by at least one support member (40) resting on the bottom of the primary vessel (2) by way of one of the two support structures constituted by the said bearing member (18) and the said flooring (16).

5. Nuclear reactor according to any one of the preceding claims characterized in that each conduit (36) is connected to the inlet of an exchanger (12) by way of a pneumatically-sealed joint.

6. Nuclear reactor according to any one of the preceding claims characterized in that each heat exchanger (12) is of modular type.

7. Nuclear reactor according to any one of the preceding claims characterized in that each heat exchanger (12) is of annular type.

8. Nuclear reactor according to any one of the preceding claims characterized in that it comprises a handling system for fuel assemblies of the core, said system comprising a transfer ramp (102) traversing the slab and the internal vessel, said ramp opening into the space (34') between said internal vessel (24) and said baffle (30), and said space permitting accommodation of the handling means (104) for the assemblies.

0018262

FIG.1

FIG.2

1

FIG.3

FIG.4

# 0 018 262

## FIG. 5

4